# EUROPÄISCHE PATENTSCHRIFT

(11) **EP 1 420 984 B1**
(45) Veröffentlichungstag und Bekanntmachung des Hinweises auf die Patenterteilung: **18.01.2006**
(21) Anmeldenummer: 02772159.6
(22) Anmeldetag: 16.08.2002
(51) Int. Cl.: B60R 25/10

(54) **KRAFTFAHRZEUG-BEWEGUNGSSENSORVORRICHTUNG**
VEHICLE MOVEMENT SENSOR DEVICE
DISPOSITIF DE DETECTION DE MOUVEMENT D'AUTOMOBILE

(30) Priorität: 16.08.2001 DE 10140068
(43) Veröffentlichungstag der Anmeldung: 26.05.2004
(73) Patentinhaber: Volkswagen Aktiengesellschaft, 38436 Wolfsburg (DE)
(72) Erfinder: KOLBE, Markus, 38550 Isenbüttel (DE); SANNY, Knut, 38179 Walle (DE)
(74) Vertreter: Banzer, Hans-Jörg
(86) Internationale Anmeldenummer: PCT/EP2002/009188
(87) Internationale Veröffentlichungsnummer: WO 2003/016109

(56) Entgegenhaltungen:
- DE-A- 4 243 587
- DE-A- 19 752 439
- DE-C- 4 211 507
- US-A- 4 897 630
- US-A- 5 148 604

## Beschreibung

Die vorliegende Erfindung betrifft eine Diebstahlwarnanlage mit einer Bewegungssensorvorrichtung zum Erfassen einer Bewegung eines Kraftfahrzeugs, wobei die Bewegungssensorvorrichtung insbesondere in Form einer Beschleunigungs- und/oder Neigungssensorvorrichtung zum Erfassen einer Beschleunigung und/oder Neigung des Kraftfahrzeugs ausgestaltet sein kann. Des Weiteren betrifft die vorliegende Erfindung ein Kraftfahrzeuginformationssystem, ein Innenraumüberwachungssystem, eine Diebstahlwarnanlage oder ein Abschleppschutzsystem mit einer derartigen Bewegungssensorvorrichtung.

Diebstahlsicherungen bzw. Diebstahlwarnanlagen und Wegfahrsperren dienen dazu, sogenannte "unbefugte Bewegungen" eines Kraftfahrzeugs zu erkennen bzw. zu verhindern. Unter "unbefugten Bewegungen" werden Bewegungen, Schräglagen oder Drehungen eines Kraftfahrzeugs verstanden, bei denen die Diebstahlwarnanlage nicht durch einen autorisierten Zugangscode oder entsprechenden Schlüssel deaktiviert wurde. Typische unbefugte Bewegungen sind in diesem Sinne das Aufladen eines Kraftfahrzeugs über eine schräge Rampe, das Anheben oder Absenken mit einem Kran oder Wagenheber und das Verschieben des Fahrzeugs bei aktivierter Alarmanlage.

Das Detektieren von unbefugten Bewegungen erfordert eine entsprechend ausgelegte Sensorik im Kraftfahrzeug. Die Sensorik kann aus einer Vielzahl verschiedenartiger Sensoren bestehen. Die verwendeten Sensoren können hierzu im Kraftfahrzeug eigens installiert werden, oder aber es können Sensoren verwendet werden, die bereits im Kraftfahrzeug für andere Zwecke eingesetzt werden.

In der Patentschrift DE 41 14 992 C1 ist ein Neigungssensor vorgestellt, bei dem ein Hohlraum nach Art eines mit der Spitze nach unten aufgestellten Ringkegels ausgebildet ist. Als Sensorelement enthält der Sensor einen im Hohlraum eingeschlossenen Kontaktkörper in Form eines Quecksilbertropfens, der sich bei neigungs- und horizontalbeschleunigungsfreiem Kraftfahrzeug an der Hohlraumspitze befindet. Neigt sich das Kraftfahrzeug, so verlagert sich der Quecksilbertropfen zum radial äußeren Hohlraumende.

In der Offenlegungsschrift DE 34 11 252 A1 ist ein weiterer Neigungssensor für Kraftfahrzeuge vorgestellt. Bei dem Sensor mit einem Behälter, der teilweise mit einer Elektrolytflüssigkeit gefüllt ist, und bei dem mehrere Sensor-Elektroden im Behälter von der Elektrolytflüssigkeit benetzt sind, tauchen zwei Elektroden und Bezugs-Elektroden senkrecht in die Elektrolytflüssigkeit ein. Die Elektroden sind dabei nach Art eines Potentiometers geschaltet.

Ein weiterer Neigungssensor ist aus der Offenlegungsschrift DE 42 17 247 bekannt. Ein Messfühler ermittelt die Längs- und Querneigung des Fahrzeugs gegenüber dem Lotrechten. Die Messeinheit weißt ein Kreuzpotentiometer und ein Pendel auf.

Sämtliche vorgestellten Systeme sind sehr voluminös und aufwendig.

Aus der DE 42 11 507 C1 ist eine Diebstahlwarnanlage gemäß dem Oberbegriff des unabhängigen Anspruchs 1 bekannt. Die Diebstahlwarnanlage umfasst eine Bewegungssensorvorrichtung zum Erfassen einer Bewegung eines Kraftfahrzeugs, wobei die Bewegungssensorvorrichtung eine Sensoreinrichtung mit einem Halbleitersensor zur Abgabe eines Sensorsignals und eine Auswerteeinrichtung zum Umsetzen des Sensorsignals in ein Bewegungssignal umfasst.

Darüber hinaus ist aus der US 4,006,452 A eine Diebstahlwarnanlage für ein Kraftfahrzeug bekannt, wobei die Diebstahlwarnanlage als eine im Wesentlichen eigenständige bauliche Einheit ausgestaltet ist und eine darin integrierte Bewegungssensorvorrichtung zum Erfassen einer Bewegung des Kraftfahrzeugs mit einer Sensoreinrichtung zur Abgabe eines entsprechenden Sensorsignals umfasst.

Der vorliegenden Erfindung liegt die Aufgabe zugrunde, eine miniaturisierte und damit leicht nachrüstbare Vorrichtung für Kraftfahrzeuge vorzuschlagen, welche Bewegungssignale hinsichtlich des Kraftfahrzeugs liefert und zur Beschleunigungs- und/oder Neigungserfassung des Kraftfahrzeugs und zum Diebstahl-oder Abschleppschutz einsetzbar ist.

Erfindungsgemäß wird diese Aufgabe durch eine Diebstahlwarnanlage mit den Merkmalen des Anspruchs 1 gelöst, wobei eine Sensoreinrichtung zur Abgabe eines Sensorsignals und eine Auswerteeinrichtung zum Umsetzen des Sensorssignals in ein die Bewegung des Kraftfahrzeugs beschreibendes Bewegungssignal vorhanden ist. Dabei umfasst erfindungsgemäß die Sensorenrichtung einen Halbleitersensor bzw. ist durch einen Halbleitersensor gebildet.

In vorteilhafter Weise lässt sich eine derartige Bewegungssensorvorrichtung in eine Diebstahlwarnanlage, ein Innenraumüberwachungssystem oder eine "intelligente Sirene" integrieren. In diesem Fall kann die Bewegungssensorvorrichtung insbesondere als Neigungssensorvorrichtung ausgestaltet sein, um zum Diebstahl- oder Abschleppschutz bereits geringfügige Neigungen des Kraftfahrzeugs zuverlässig erfassen zu können. Die Neigungssensorvorrichtung kann beispielsweise in ein Steuergerät oder eine andere

Komponente der Diebstahlwarnanlage oder einer als eine bauliche Einheit ausgestalteten "intelligenten Sirene" integriert sein.

Aufgrund der Verwendung eines Halbleitersensors kann die Sensoreinrichtung miniaturisiert werden, so dass ebenso eine einfache Integration der erfindungsgemäßen Bewegungssensorvorrichtung in ein Kraftfahrzeugsinformationssystem (beispielsweise zur Bereitstellung von Bewegungs- oder Neigungsinformationen für eine optische Anzeige, eine Weiterverarbeitung oder einen Funkabruf) oder ein Innenraumüberwachungssystem möglich ist.

Aufgrund der mit der Verwendung eines Halbleitersensors verbundenen Möglichkeit einer Miniaturisierung der gesamten Bewegungssensorvorrichtung kann die erfindungsgemäße Bewegungssensorvorrichtung allgemein beispielsweise zum Diebstahl- oder Abschleppschutz in jede beliebige Diebstahlwarnkomponente, insbesondere auch in ein Backup-Horn, integriert werden, so dass in diesem Fall eine "intelligente Sirene" als eine eigenständige bauliche Einheit (Stand-Alone-Gerät) erhalten wird. Diese bauliche Einheit kann eine eigene Batterie zur Energieversorgung aufweisen. Ebenso ist jedoch auch denkbar, dass zur Energieversorgung ein Akkumulator vorhanden ist, welcher zum Aufladen über entsprechende elektrische Anschlüsse an das Bordnetz des Kraftfahrzeugs angeschlossen werden kann. Zudem weist erfindungsgemäß diese bauliche Einheit Anschlüsse für einen CAN-Bus des Kraftfahrzeugs auf, um im Falle der Erkennung eines Diebstahls Steuersignale, welche an andere Komponenten des Kraftfahrzeugs über den CAN-Bus übertragen werden, zu erzeugen. Diese Steuersignale können beispielsweise das Kraftfahrzeug stilllegen oder die Blinklichter des Kraftfahrzeugs betätigen.

Die vorliegende Erfindung wird nachfolgend näher anhand eines bevorzugten Ausführungsbeispiels unter Bezugnahme auf die beigefügte Zeichnung erläutert. Dabei wird die erfindungsgemäße Bewegungssensorvorrichtung insbesondere anhand der bevorzugten Ausführungsform als Neigungssensorvorrichtung zum Abschlepp- oder Diebstahlschutz erläutert. Die vorliegende Erfindung ist jedoch selbstverständlich nicht auf diese bevorzugte Ausführungsform beschränkt, sondern kann grundsätzlich auf alle Arten von Sensorvorrichtungen angewendet werden, welche im Prinzip beliebige Bewegungen eines Kraftfahrzeugs erfassen sollen. Insbesondere kann die vorliegende Erfindung beispielsweise auch als eine Beschleunigungssensorvorrichtung ausgestaltet sein, welche die Bewegung des entsprechenden Kraftfahrzeugs anhand seiner Beschleunigung erfasst.
- Fig.1: zeigt ein Kraftfahrzeug mit seinen Bezugsachsen;
- Fig. 2: zeigt ein Kraftfahrzeug bei einem Abschleppvorgang gemäß einer ersten Variante;
- Fig. 3: zeigt ein Kraftfahrzeug bei einem Abschleppvorgang gemäß einer zweiten Variante; und
- Fig. 4: zeigt eine erfindungsgemäße intelligente Sirene.

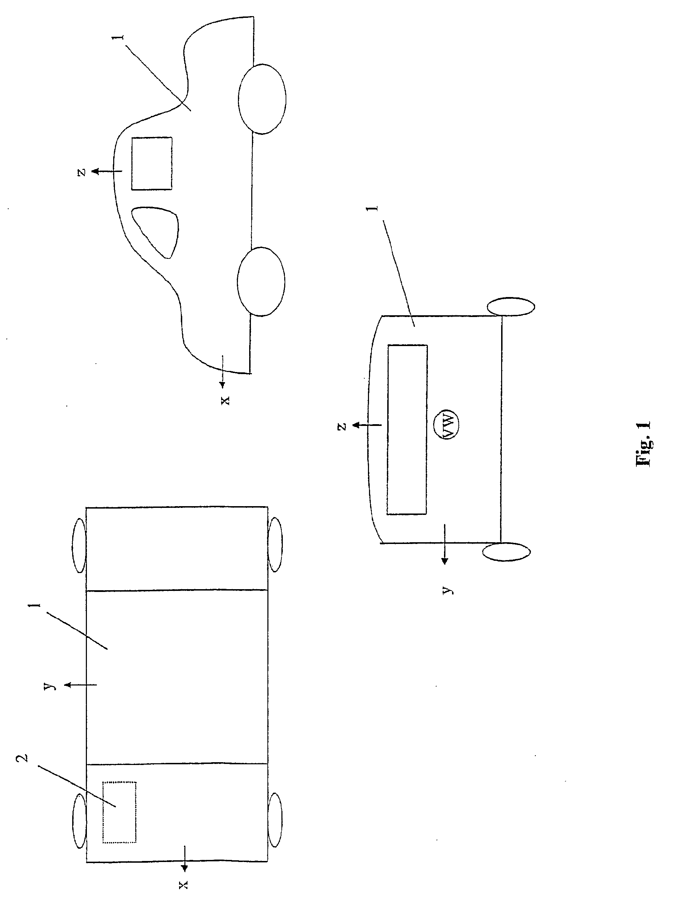

In Fig. 1 sind zunächst die im Weiteren verwendeten Fahrzeugkoordinaten erläutert. Die Draufsicht auf ein Fahrzeug 1 im Bild links oben zeigt die positive x-Koordinate in Fahrtrichtung und die positive y-Richtung 90° gedreht zur x-Richtung, d. h. quer zur Fahrtrichtung. Das Bild rechts oben in Fig. 1 zeigt eine Seitenansicht des Kraftfahrzeuges 1, wobei die z-Richtung nach oben weist. Schließlich zeigt das Bild in der Mitte unten eine Frontansicht des Fahrzeuges, wobei nochmals die γ- und z-Achse angedeutet sind.

In Fig. 1 ist weiterhin in der Draufsicht des Kraftfahrzeuges 1 eine Diebstahlwarnvorrichtung 2 angedeutet. Sie kann grundsätzlich an jeder geeigneten Stelle des Kraftfahrzeuges angebracht werden.

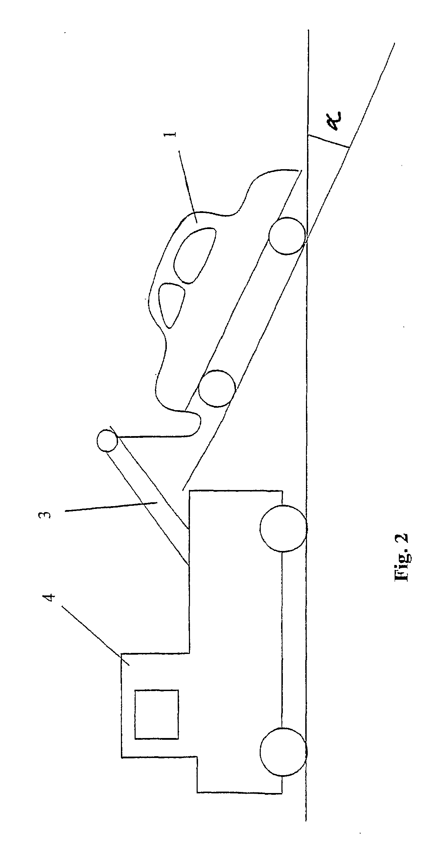

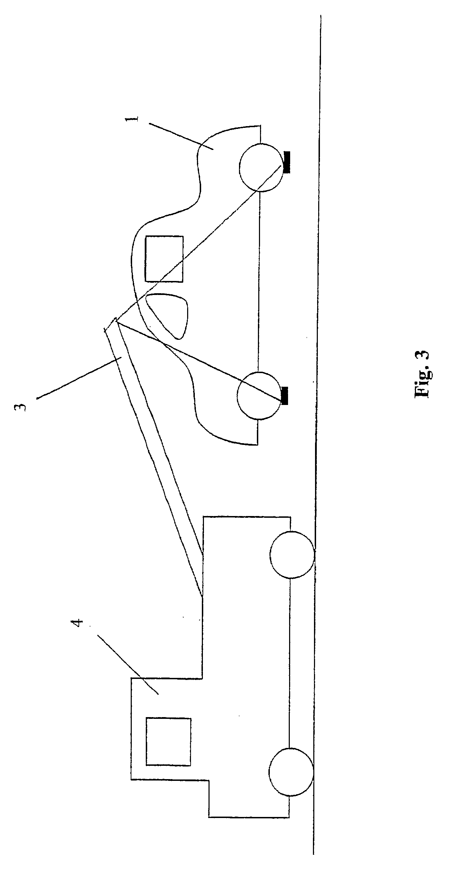

Die Fig. 2 und 3 zeigen typische Abschleppvorgänge, die häufig auch bei Kraftfahrzeugdiebstählen Anwendung finden. Gemäß Fig. 2 wird das Kraftfahrzeug 1 durch einen Kran 3 über eine Rampe auf einen Transporter 4 gezogen. Die Rampe weist gegenüber der Horizontalen einen Winkel α auf. Eine derartige Neigung lässt sich durch einen Neigungssensor detektieren. Ein Neigungssignal des Neigungssensors kann dazu verwendet werden, einen Alarm auszulösen. Dies ist üblicherweise nur sinnvoll, wenn das Kraftfahrzeug geparkt und die Alarmanlage aktiviert ist.

Wird das Fahrzeug durch einen Wagenheber angehoben, so neigt es sich entsprechend einseitig. Diese einseitige Neigung korrespondiert mit einer Neigung zur Horizontalen entsprechend dem Winkel α von Fig. 2, die mit dem Neigungssensor detektierbar ist. Somit lassen sich auch Reifendiebstahlversuche erkennen.

Gemäß der in Fig. 3 gezeigten Variante wird das Kraftfahrzeug 1 durch einen Kran 3 auf den Transporter 4 gehoben. Dabei verändert sich die waagrechte Position des Kraftfahrzeuges 1 im Wesentlichen nicht. Auch dieser Fall des waagrechten Anhebens des Kraftfahrzeuges 1 muss von einer guten Diebstahlwarnanlage 2 erkannt werden.

Erfindungsgemäß ist das Kraftfahrzeug 1 mit einer Diebstahlschutzvorrichtung 2 versehen, deren Sensor ein Halbleitersensor ist. Halbleitersensoren haben grundsätzlich den Vorteil, dass sie mit einer sehr geringen Baugröße gefertigt werden können. Daher kann auch der Energieverbrauch verhältnismäßig gering gehalten werden. Die Halbleitersensoren müssen aber auch den hohen Anforderungen im Kraftfahrzeugbereich genügen. So werden insbesondere sehr hohe Anforderungen an die Temperaturbeständigkeit gestellt.

Für Neigungssensoren mit derartigen Anforderungen können Differenzialkondensatoren auf Siliziumbasis gewählt werden. Ihre Funktionsweise basiert auf mikromechanischen Doppel-Plattenkondensatoren, deren mittlere gemeinsame Platte an einer beweglich aufgehängten Masse fixiert ist. Bei Beschleunigungen verschiebt sich die Masse, wodurch sich deren Kapazität ändert. Durch entsprechenden Aufbau kann eine Masse für zwei Achsen verwendet werden.

Ebenso als integrierte Schaltung (IC) aufbaubar ist ein piezoresistiver Beschleunigungsmesser. Ein derartiger mikromechanischer Beschleunigungsmesser besteht aus drei Siliziumschichten. Die mittlere Schicht wird so geätzt, dass eine mechanische Struktur entsteht, bei der eine träge Masse durch zwei gegenüberliegende Biegebalken getragen wird. Durch Ionen-Implantation werden piezoresistive Widerstände in den Biegebalken erzeugt. Diese werden als Wheatstonesche Brücke geschaltet. Eine auftretende Beschleunigung bewegt die träge Masse und die resultierende Verbiegung der Biegebalken führt zu einer Änderung der Widerstände und somit zu einer Verstimmung der Brücke. Die Brückenschaltung liefert ein zur Beschleunigung proportionales Signal.

Beschleunigungsmesser dieser Art sind in Mikrochips integrierbar und somit als Massenprodukt herstellbar. Damit sind sie auch sehr robust und im Kraftfahrzeugbereich einsetzbar.

Auch andere auf Halbleiterbasis gefertigte Beschleunigungssensoren sind erfindungsgemäß verwendbar. Voraussetzung ist lediglich, dass sie sich durch ihre Mikrobauweise beispielsweise in andere Systeme des Abschleppschutzes integrieren lassen. Die aus dem Stand der Technik bekannten Sensoren weisen demgegenüber wesentlich größere Abnutzungen auf, wie z. B. die Flüssigkeitssensoren.

Die oben beschriebenen Sensoren auf Halbleiterbasis sind für die Erfassung von Neigungen geeignet. Bei dynamischer Messung werden unter Umständen mit mehreren Sensoren Beschleunigungskomponenten erfasst, womit eine Neigung bzw. ein Kippen detektiert werden kann. Bei statischer Messung kann beispielsweise die Erdanziehungskraft zur Erfassung einer Neigung des Kraftfahrzeuges herangezogen werden.

Falls ein Kraftfahrzeug 1 gemäß der Skizze von Fig. 3 in z-Richtung angehoben wird, kommt es üblicherweise auch zu Schwankungen des Kraftfahrzeuges und damit zu Bewegungen in x- und y-Richtung. Da in diesem Fall die Beschleunigung in z-Richtung verhältnismäßig gering ist, ist sie kaum zu detektieren. Demgegenüber sind die Schwankungen des Kraftfahrzeuges 1 in x- und y-Richtung ohne Weiteres zu erfassen. Bei entsprechender Anordnung des Sensors im Kraftfahrzeug 1 kann damit auch das Anheben des Kraftfahrzeuges in z-Richtung erfasst werden.

Die Miniaturbauweise der Beschleunigungssensoren bzw. -aufnehmer auf Halbleiterbasis ermöglicht, wie bereits erwähnt, deren integration in andere Kfz-Komponenten. So ist es beispielsweise möglich einen Halbleiterbeschleunigungssensor in Baukomponenten der Innenraumsensorik, die den Innenraum eines Kraftfahrzeuges durch Ultraschall oder Mikrowellen abtastet, zu integrieren.

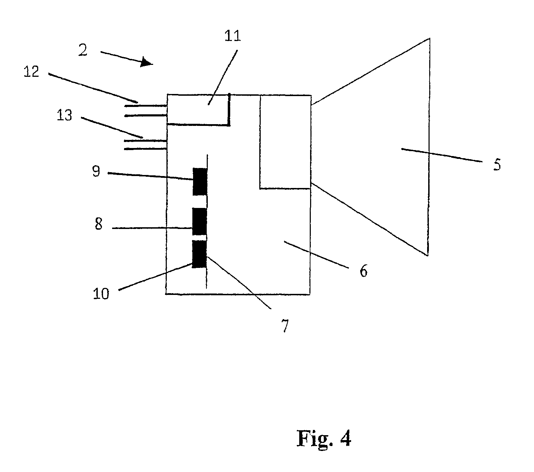

Darüber hinaus ist mit Halbleiterbeschleunigungssensoren der Aufbau einer "intelligenten Sirene" mit geringen Abmessungen möglich. Fig. 4 zeigt eine derartige "intelligente Sirene". Die eigentliche Sirene 5 wird durch ein Steuergerät 6 angesteuert. Das Steuergerät 6 umfasst eine Steuerplatine 7, auf der der als IC ausgeführte Halbleiterbeschleunigungssensor 8 angeordnet ist.

Neben dem Halbleiter-Beschleunigungs- bzw. Neigungssensor 8 ist auf der Steuerplatine 7 auch eine Steuer- oder Auswerteeinrichtung 9 angeordnet, welche das von dem Sensor 8 erzeugte Sensorsignal in ein Beschleunigungs- oder Neigungssignal umsetzt. Selbstverständlich können die beiden Komponenten 8 und 9 auch in Form einer Einheit als integrierte Schaltung ausgestaltet sein. Darüber hinaus ist auf der Steuerplatine 7 auch ein Speicher 10 angeordnet. Ist der Sensor 8 beispielsweise in Form eines Halbleitersensors mit einem frei schwingend gelagerten (z.B. trapezförmigen) Element ausgestaltet, kann beim Abstellen des entsprechenden Kraftfahrzeugs die augenblickliche Lage dieses frei schwingenden Elements in dem Speicher 10 gespeichert werden. Anschließend überwacht die Auswerteeinrichtung 9 kontinuierlich durch Auswertung des Sensorsignals des Sensors 8 die Lage dieses frei schwingenden Elements und kann somit durch Vergleich mit der in dem Speicher 10 gespeicherten Information einen Diebstahl feststellen, wenn die augenblickliche Lage des frei schwingenden Elements des Halbleitersensors 8 von der in dem Speicher 10 gespeicherten Lage des frei schwingenden Elements um mehr als einen vorgegebenen Grenzwert abweicht. In diesem Fall kann die Auswerteeinrichtung 9 eine automatische Betätigung der Sirene 5 hervorrufen. Durch die Verwendung des Halbleitersensors 8 können somit selbst geringe Lageänderungen oder Bewegungen des Kraftfahrzeugs, beispielsweise das Anheben lediglich eines Reifens, zuverlässig erfasst und in diesem Fall ein Alarm ausgelöst werden.

Die in Fig. 4 gezeigte "intelligente Sirene", welche im Prinzip eine Diebstahlwarnanlage in Verbindung mit einer erfindungsgemäßen Bewegungs-, Neigungs- oder Beschleunigungssensorvorrichtung in Form einer separaten, eigenständigen kompakten baulichen Einheit 2 umfasst, weist vorzugsweise eine eigenständige Energieversorgungseinheit 11 auf. Diese Energieversorgungseinheit 11 kann beispielsweise in Form eines Akkumulators oder in Form einer Batterie ausgestaltet sein, wobei die Verwendung einer Batterie in der Regel aufgrund der längeren Lebensdauer der Batterie vorteilhaft ist. Wird als Energieversorgungseinheit 11 ein Akkumulator verwendet, kann dieser beispielsweise über lösbare Steckverbindungsanschlüsse 12 zum Aufladen an das Bordnetz des Kraftfahrzeugs angeschlossen werden. Darüber hinaus sind in Fig. 4 auch weitere Steckverbindungsanschlüsse 13 dargestellt, mit deren Hilfe die "intelligente Sirene" beispielsweise an einen CAN-Bus oder Steuerbus des Kraftfahrzeugs angeschlossen werden kann, so dass von der Steuer- oder Auswerteeinrichtung 9 bei Feststellen eines Diebstahls entsprechende Steuersignale über den CAN-Bus übertragen werden können, um die Blinklichter des Kraftfahrzeugs zu betätigen oder das Kraftfahrzeug still zu legen. Ebenso können über diese Steckverbindungsanschlüsse 13 auch Informationen an den CAN-Bus und somit an die anderen elektronischen Komponenten des Kraftfahrzeugs übertragen werden, welche die augenblickliche Neigungsstellung des Kraftfahrzeugs beschreiben. Über die Steckverbindungsanschlüsse 12 und 13 kann die "intelligente Sirene" einfach in entsprechend vorgesehene Anschlussöffnungen des Kraftfahrzeugs gesteckt und somit ohne großen Aufwand verbaut werden.

Eine derartige "intelligente Sirene" kleiner Bauart lässt sich auch ohne weiteres nachträglich in ein Kraftfahrzeug einbauen. Aufgrund der kleinen Bauform lässt sich ein Halbleiter-Neigungssensor auch direkt in ein Steuergerät einer Diebstahlwarnanlage einbauen. Grundsätzlich kann der Neigungssensor aber auch in jede andere Kraftfahrzeugkomponente integriert werden. So eignet sich insbesondere eine Innenraumüberwachungskomponente hierzu, in der ebenso auf einer Steuerplatine der als IC ausgeführte Halbleiterbeschleunigungssensor angeordnet sein kann.

Für Diebstahlwarnanlagen ist es wesentlich, die Bewegungen des Fahrzeuges bei Diebstahlversuchen von denen im Normalbetrieb deutlich auseinanderhalten zu können. Da dies in der Regel durch einfache Schwellwertbetrachtungen nicht möglich ist, können entsprechende Rechner- bzw. Mikroprozessoreinrichtungen hierfür verwendet werden. Dabei ist es zweckmäßig, Beschleunigungsprofile, die für Bewegungen von Kraftfahrzeugen bei Diebstahlversuchen typisch sind, in einer Speichereinrichtung zu speichern. Hierzu können Beschleunigungsprofile von einem Sensor oder von mehreren Sensoren, die mehrere Bewegungsachsen erfassen, aufgenommen werden. Auf der Basis dieser Profile können Auswertelogiken so programmiert werden, dass Diebstahlversuche verhältnismäßig einfach erkannt und von anderen Bewegungen unterschieden werden können.

Der erfindungsgemäße Halbleiterbeschleunigungsaufnehmer als Neigungssensor eignet sich nicht nur für Diebstahlwarnanlagen bzw. Abschleppschutzsysteme sondern auch für Informationssysteme, die den Benutzer des Kraftfahrzeuges im Normalbetrieb über den Zustand des Kraftfahrzeuges direkt oder per Funk informieren. So kann der Halbleiterneigungssensor auch dazu verwendet werden, dem Fahrer den Neigungswinkel seines Kraftfahrzeuges mitzuteilen, damit insbesondere bei Lastkraftwagen ein Kippen verhindert werden kann.

### BEZUGSZEICHENLISTE

- 1: Kraftfahrzeug
- 2: Diebstahlwarnanlage
- 3: Kran
- 4: Transporter
- 5: Sirene
- 6: Steuergerät
- 7: Steuerplatine
- 8: Sensoreinrichtung
- 9: Auswerteeinrichtung
- 10: Speichereinrichtung
- 11: Batterie/Akku
- 12: Steckverbindungsanschlüsse für Akku
- 13: Steckverbindungsanschlüsse für CAN-Bus

## Patentansprüche

1. Diebstahlwarnanlage für eine Kraftfahrzeug,
mit einer Bewegungssensorvorrichtung zum Erfassen einer Bewegung des Kraftfahrzeugs (1), wobei die Bewegungssensorvorrichtung eine Sensoreinrichtung (8) mit einem Halbleitersensor zur Abgabe eines Sensorsignals und eine Auswerteeinrichtung (9) zum Umsetzen des Sensorsignals in ein Bewegungssignal umfasst,
**dadurch gekennzeichnet,**
**dass** die Diebstahlwarnanlage (2) mit der darin integrierten Bewegungssensorvorrichtung als eine im Wesentlichen eigenständige bauliche Einheit (2) ausgestaltet ist, und
**dass** Anschlussmittel (13) für einen Anschluss der Diebstahlwarnanlage (2) an einen Steuerbus des Kraftfahrzeugs (1) zur Übertragung von Steuerinformationen für den Fall der Erkennung eines Diebstahls des Kraftfahrzeugs (1) infolge einer Auswertung des Sensorsignals der Sensoreinrichtung (8) der Bewegungssensorvorrichtung umfasst.

2. Diebstahlwarnanlage nach Anspruch 1, **dadurch gekennzeichnet, dass** der Halbleitersensor ein piezoresistiver Sensor oder ein differentialkapazitiver Sensor ist.

3. Diebstahlwarnanlage nach Anspruch 1 oder 2, **dadurch gekennzeichnet, dass** die Sensoreinrichtung (8) mit dem Halbleitersensor als integrierte Schaltung ausgeführt ist.

4. Diebstahlwarnanlage nach einem der vorhergehenden Ansprüche, **dadurch gekennzeichnet, dass** die Bewegungssensorvorrichtung in Form einer Beschleunigungssensorvorrichtung zum Erfassen einer Beschleunigung des Kraftfahrzeugs (1) ausgestaltet ist, wobei die Auswerteeinrichtung zum Umsetzen des Sensorsignals in ein Beschleunigungssignal ausgestaltet ist.

5. Diebstahlwarnanlage nach einem der vorhergehenden Ansprüche, **dadurch gekennzeichnet, dass** die Bewegungssensorvorrichtung als eine Neigungssensorvorrichtung zum Erfassen einer Neigung des Kraftfahrzeugs (1) ausgestaltet ist, wobei die Auswerteeinrichtung (9) zum Umsetzen des Sensorsignals in ein Neigungssignal ausgestaltet ist.

6. Diebstahlwarnanlage nach Anspruch 5, **dadurch gekennzeichnet, dass** die als Neigungssensorvorrichtung ausgestaltete Bewegungssensorvorrichtung eine Speichereinrichtung (10) zum Speichern einer Neigungsinformation der Auswerteeinrichung (9) beim Abstellen des Kraftfahrzeugs (1) umfasst, wobei die Auswerteeinrichtung (9) derart ausgestaltet ist, dass sie kontinuierlich das von der Sensoreinrichtung (8) abgegebene Sensorsignal bzw. das entsprechende Neigungssignal mit der in der Speichereinrichtung (10) gespeicherten Neigungsinformation vergleicht und bei Feststellen einer Abweichung, welche einen vorgegebenen Grenzwert übersteigt, ein Alarmsignal erzeugt.

7. Kraftfahrzeugsinformationssystem mit einer Diebstahlwarnanlage (2) nach einem der vorhergehenden Ansprüche zur Bereitstellung von dem Bewegungssignal der Auswerteeinrichtung (9) der Bewegungssensorvorrichtung entsprechenden Bewegungsinformationen.

8. Diebstahlwarnanlage nach einem der vorhergehenden Ansprüche, **dadurch gekennzeichnet, dass** Anschlussmittel (12) für einen Anschluss der Diebstahlwarnanlage (2) an ein Energieversorgungsnetz des Kraftfahrzeugs (1) vorgesehen sind.

9. Diebstahlwarnanlage nach einem der vorhergehenden Ansprüche, **dadurch gekennzeichnet, dass** die Anschlussmittel (12, 13) zum lösbaren Anschluss der Diebstahlwarnanlage (2) ausgestaltet sind.

10. Diebstahlwarnanlage nach einem der vorhergehenden Ansprüche, **dadurch gekennzeichnet, dass** die Diebstahlanwarnanlage (2) eine Energieversorgungseinrichtung (11) zur eigenständigen Energieversorgung der Diebstahlwarnanlage (2) umfasst.

11. Intelligente Sirene oder Innenraumüberwachungssystem mit einer Diebstahlwarnanlage (2) nach einem der vorhergehenden Ansprüche.

## Claims

1. Antitheft warning system for a motor vehicle, having a motion sensor apparatus for detection of any motion of the vehicle (1), with the motion sensor apparatus having a sensor device (8) with a semiconductor sensor for emission of a sensor signal, and having an evaluation device (9) for conversion of the sensor signal to a motion signal,
**characterized**
**in that** the antitheft warning system (2) is designed together with the motion sensor apparatus integrated in it as an essentially autonomous physical unit (2), and has connecting means (13) for connection of the antitheft warning system (2) to a control bus in the motor vehicle (1) in order to transmit control information in a situation in which theft of the motor vehicle (1) has been identified, as a consequence of evaluation of the sensor signal from the sensor device (8) in the motion sensor apparatus.

2. Antitheft warning system according to Claim 1, **characterized in that** the semiconductor sensor is a piezoresistive sensor or a differential-capacitive sensor.

3. Antitheft warning system according to Claim 1 or 2, **characterized in that** the sensor device (8) is designed together with the semiconductor sensor as an integrated circuit.

4. Antitheft warning system according to one of the preceding claims, **characterized in that** the motion sensor apparatus is designed in the form of an acceleration sensor apparatus for detection of acceleration of the motor vehicle (1), with the evaluation device being designed to convert the sensor signal to an acceleration signal.

5. Antitheft warning system according to one of the preceding claims, **characterized in that** the motion sensor apparatus is designed as an inclination sensor apparatus for detection of any inclination of the motor vehicle (1), with the evaluation device (9) being designed to convert the sensor signal to an inclination signal.

6. Antitheft warning system according to Claim 5, **characterized in that** the motion sensor apparatus, which is designed as an inclination sensor apparatus, has a memory device (10) for storage of inclination information from the evaluation device (9) during parking of the motor vehicle (1) with the evaluation device (9) being designed such that it continuously compares the sensor signal emitted from the sensor device (8) or the corresponding inclination signal with the inclination information stored in the memory device (10), and produces an alarm signal if a discrepancy which exceeds a predetermined limit value is found.

7. Motor vehicle information system with an antitheft warning system (2) according to one of the preceding claims for provision of motion information which corresponds to the motion signal from the evaluation device (9) of the motion sensor apparatus.

8. Antitheft warning system according to one of the preceding claims, **characterized in that** connection means (12) are provided for connection of the antitheft warning system (2) to a power supply network in the motor vehicle (1).

9. Antitheft warning system according to one of the preceding claims, **characterized in that** the connection means (12, 13) are designed for detachable connection of the antitheft warning system (2).

10. Antitheft warning system according to one of the preceding claims, **characterized in that** the antitheft warning system (2) has a power supply device (11) for supplying power autonomously to the antitheft warning system (2).

11. Intelligent sirens or internal area monitoring system having an antitheft warning system (2) according to one of the preceding claims.

## Revendications

1. Installation d'alarme antivol pour une automobile, avec un dispositif de détection de mouvement pour détecter un mouvement de l'automobile (1), le dispositif de détection de mouvement comprenant un équipement de détection (8) doté d'un détecteur semi-conducteur pour délivrer un signal de détecteur et un équipement d'interprétation (9) pour transformer le signal du détecteur en un signal de mouvement,
**caractérisée**
**en ce que** l'installation d'alarme antivol (2) intégrant le dispositif de détection de mouvement est réalisée sous la forme d'une unité modulaire (2) essentiellement autonome,
et **en ce qu'**elle comprend des moyens de connexion (13) pour connecter l'installation d'alarme antivol (2) à un bus de commande de l'automobile (1) afin de transmettre des informations de commande en cas d'identification d'un vol de l'automobile (1) suite à une interprétation du signal de détecteur de l'équipement de détection (8) du dispositif de détection de mouvement.

2. Installation d'alarme antivol selon la revendication 1, **caractérisée en ce que** le détecteur semi-conducteur est un détecteur piézorésistif ou un détecteur capacitif différentiel.

3. Installation d'alarme antivol selon la revendication 1 ou 2, **caractérisée en ce que** l'équipement de détection (8) doté du détecteur semi-conducteur est réalisé sous forme de circuit intégré.

4. Installation d'alarme antivol selon l'une quelconque des revendications précédentes, **caractérisée en ce que** le dispositif de détection de mouvement est réalisé sous la forme d'un dispositif de détection d'accélération pour détecter une accélération de l'automobile (1), l'équipement d'interprétation étant conçu pour transformer le signal du détecteur en un signal d'accélération.

5. Installation d'alarme antivol selon l'une quelconque des revendications précédentes, **caractérisée en ce que** le dispositif de détection de mouvement est réalisé sous la forme d'un dispositif de détection d'inclinaison pour détecter une inclinaison de l'automobile (1), l'équipement d'interprétation (9) étant conçu pour transformer le signal du détecteur en un signal d'inclinaison.

6. Installation d'alarme antivol selon la revendication 5, **caractérisée en ce que** le dispositif de détection de mouvement réalisé sous forme de dispositif de détection d'inclinaison comprend un équipement de mémorisation (10) pour mémoriser une information d'inclinaison de l'équipement d'interprétation (9) pour l'automobile (1) en stationnement, l'équipement d'interprétation (9) étant conçu de telle sorte qu'il compare en permanence le signal de détection délivré par l'équipement de détection (8), ou encore l'information d'inclinaison correspondante, à l'information d'inclinaison mémorisée dans l'équipement de mémorisation (10), et qu'il produit un signal d'alarme en cas de constatation d'une divergence supérieure à une valeur limite prédéfinie.

7. Système d'information d'automobile avec une installation d'alarme antivol (2) selon l'une quelconque des revendications précédentes pour fournir des informations de mouvement correspondant au signal de mouvement de l'équipement d'interprétation (9) du dispositif de détection de mouvement.

8. Installation d'alarme antivol selon l'une quelconque des revendications précédentes, **caractérisée en ce que** des moyens de connexion (12) sont prévus pour connecter l'installation d'alarme antivol (2) à un réseau d'alimentation en énergie de l'automobile (1).

9. Installation d'alarme antivol selon l'une quelconque des revendications précédentes, **caractérisée en ce que** les moyens de connexion (12, 13) sont conçus pour une connexion amovible de l'installation d'alarme antivol (2).

10. Installation d'alarme antivol selon l'une quelconque des revendications précédentes, **caractérisée en ce que** l'installation d'alarme antivol (2) comprend un équipement (11) d'alimentation en énergie pour l'alimentation autonome en énergie de l'installation d'alarme antivol (2).

11. Sirène intelligente ou système de surveillance d'habitacle avec une installation d'alarme antivol (2) selon l'une quelconque des revendications précédentes.
